# EUROPÄISCHE PATENTSCHRIFT

(11) **EP 1 560 730 B1**
(45) Veröffentlichungstag und Bekanntmachung des Hinweises auf die Patenterteilung: **19.09.2012**
(21) Anmeldenummer: 03789023.3
(22) Anmeldetag: 11.11.2003
(51) Int. Cl.: B60P 1/44, B60P 1/02, B60P 3/055, B60J 5/14

(54) **FAHRZEUG MIT LADEBOXEN ODER LADEFLÄCHEN**
VEHICLE WITH LOADING BOXES OR LOADING SURFACES
VEHICULE A CONTENEURS DE CHARGEMENT OU PLATE-FORMES DE CHARGEMENT

(30) Priorität: 13.11.2002 DE 10252682
(43) Veröffentlichungstag der Anmeldung: 10.08.2005
(73) Patentinhaber: Hurler, Walter, 86391 Stadtbergen (DE)
(72) Erfinder: Hurler, Walter, 86391 Stadtbergen (DE)
(74) Vertreter: Lorenz, Werner
(86) Internationale Anmeldenummer: PCT/EP2003/012548
(87) Internationale Veröffentlichungsnummer: WO 2004/043735

(56) Entgegenhaltungen:
- EP-A- 1 232 904
- CA-A- 1 107 790
- DE-A- 4 114 044
- DE-U- 8 234 715
- FR-A- 1 509 096
- FR-A- 1 554 461
- GB-A- 677 446
- GB-A- 2 203 184
- US-A- 4 652 042
- US-A- 4 659 132
- US-B1- 6 464 446

## Beschreibung

Die Erfindung betrifft ein Fahrzeug mit wenigstens einer Vorderachse und wenigstens einer Hinterachse, mit heb- und senkbaren Ladeboxen oder Ladeflächen zur Aufnahme von Ladegut, mit einem Fahrzeugrahmen und mit einer Laderampe am Heck des Fahrzeugrahmens, wobei wenigstens ein Teil der Ladeboxen oder Ladeflächen durch an dem Fahrzeugrahmen angeordnete Hubeinrichtungen in vertikaler Richtung heb- und senkbar ist.

Ein Fahrzeug dieser Art ist zum Beispiel in der EP 0 733 003 B1 und dem DE-GM 298 13 993 beschrieben.

Zum weiteren Stand der Technik wird auf die EP-A-1 232 904, GB-A-2 203 184, DE 8234 715 U und die FR-A-1 554 461 verwiesen.

Zum Beladen und Entladen von Lastkraftwagen müssen häufig Gabelstapler oder ähnliche Hubeinrichtungen eingesetzt werden, um das Ladegut vom Boden auf die oftmals relativ hoch liegende Ladefläche zu heben und auch wieder abzusetzen.

Zur Erleichterung des Be- und Entladevorganges sind Lastkraftwagen häufig auch auf ihrer Rückseite außenseitig mit Laderampen versehen, die im allgemeinen eine Tiefe von ca. 2 m besitzen. Im Fahrzustand ist die Laderampe senkrecht an der Rückseite des Fahrzeuges nach oben geklappt. Zum Be- und Entladen wird diese über Hubzylinder in einem ersten Schritt in die Waagrechte gebracht. Die Fahrzeugrückseite wird geöffnet und das zu entladende Gut wird auf die Laderampe geschoben. Anschließend wird die Laderampe durch weitere Zylinder bis auf den Boden abgesenkt.

Nachteilig bei diesem Verfahren ist jedoch, dass ein entsprechend hoher Rangierabstand bzw. Platzbedarf hinter dem Fahrzeug zum Absetzen der Laderampe erforderlich ist, was häufig aufgrund der Parkplatzknappheit zu Problemen führt. Darüber hinaus ist die Laderampe in ihrer angehobenen horizontalen Stellung nicht nur ein Verkehrshindernis, sondern darüber hinaus auch eine Gefährdung, insbesondere für Motorrad- und Fahrradfahrer.

Da sich in der oberen Position der Laderampe diese in einer Höhe von mehr als 1 m befindet, besteht darüber hinaus eine Unfallgefahr beim Be- und Entladen, insbesondere, wenn die Laderampe durch Schnee oder Regen rutschig ist.

Der vorliegenden Erfindung liegt daher die Aufgabe zugrunde, bei einem Fahrzeug der eingangs erwähnten Art, wobei durch die absenkbaren Ladeboxen oder Ladeflächen eine weitgehende Erleichterung zum Be- und Entladen geschaffen wird, darüber hinaus diese noch weiter zu verbessern, insbesondere eine Verkehrsraum sparende Be- und Entlademöglichkeit zu schaffen.

Erfindungsgemäß wird diese Aufgabe durch die in Anspruch 1 genannten Merkmale gelöst.

Durch die erfindungsgemäße Ausgestaltung wird praktisch die bisher außenliegende Laderampe nach innen in das Fahrzeug verlegt, womit eine deutliche Reduzierung von öffentlicher Verkehrsfläche zum Be- und Entladen erreicht wird. So kann z.B. durch den Wegfall einer außenliegenden Laderampe nach hinten Platz eingespart werden. Da außerdem auch an einer oder beiden Fahrzeugseiten Öffnungsflächen vorgesehen sind, ist notfalls zum Be- und Entladen hinter dem Fahrzeug überhaupt kein Platz mehr nötig.

Bei der erfindungsgemäßen Ausgestaltung kann z.B. der gesamte Überhang des Fahrzeugrahmens hinter der Hinterachse als innenliegende Laderampe ausgebildet sein. Dies bedeutet, der Bereich hinter der Hinterachse wirkt praktisch durch ein oder mehrere bewegliche Ladeboxen oder Ladeflächen, die durch Hubeinrichtungen von einer Fahrstellung bis zu einer Entladestellung am Boden verschiebbar sind, als Laderampe. Desgleichen sind für die erfindungsgemäße Laderampe auch beliebige Zwischenstellungen möglich. Ebenso kann sie auch auf Rampenhöhe an Gebäuden angehoben werden.

Dabei ist vorgesehen, dass auf der Rückseite des Fahrzeugs das Rolltor in seitlichen Führungen verschiebbar ist. Beide Seitenflächen sind mit Schiebetüren versehen, die zum Entladen nach vorne geschoben werden können und somit seitliche Öffnungsflächen vollständig freigeben. Die beidseits angebrachten Schiebetüren sind erfindungsgemäß mit vertikalen Seitenführungen versehen, in denen das hintere Rolltor läuft, welches im geöffneten Zustand in einen Stauraum in die Dachkonstruktion eingeschoben werden kann.

Durch die erfindungsgemäße Ausgestaltung ist in abgesenktem Zustand aber auch in Zwischenstellungen oder in Rampenhöhe der wenigstens einen hinteren Ladebox oder Ladefläche diese von allen drei Seiten her, nämlich von der Rückseite und von beiden Seiten her, ohne störende Halteglieder oder Stabilisierungseinrichtungen zugänglich.

In einer vorteilhaften Ausgestaltung können die Schiebetüren an ihren hinteren Enden mit nach innen gerichteten Abwinkelungen versehen sein, an denen die Fahrzeugheckbeleuchtung und gegebenenfalls weitere an der Fahrzeugrückseite erforderlichen Einrichtungen angebracht sind.

Die Befestigung und auch die Führung für die Schiebetür oder für die beiden Schiebetüren nebst Rolltor kann in der über die Hinterachse nach hinten stehende Dachkonstruktion erfolgen.

Wenn man das seitliche oder die seitlichen Schiebetore nicht über die gesamte Fahrzeughöhe auslegt, sondern im unteren Bereich einen Bereich für eine seitliche Bordwand freilässt oder zusätzlich dazu Platz vorsieht, dann kann die seitliche Bordwand in abgesenktem Zustand als Auffahrrampe dienen, wozu sie entsprechend seitlich herausgeschwenkt wird. Gleiches gilt für die Fahrzeugrückseite mit dem Rolltor.

Ein weiterer Vorteil der erfindungsgemäßen Lösung besteht darin, dass sich problemlos Fahrzeuge auch nachträglich in erfindungsgemäßer Weise umrüsten lassen. Hierzu ist es lediglich erforderlich, bei einem Fahrzeug mit einem Leiterrahmen, wobei zwei seitlich auf Abstand voneinander angeordnete Längsträger mit dazwischenliegenden Quertraversen vorgesehen sind, den Leiterrahmen im Bereich der Hinterachse abzutrennen. Versieht man dann die C-Säule, welche im Bereich der Hinterachse des Fahrzeugs angeordnet ist, mit einer Hubeinrichtung, so lassen sich als komplette Baugruppe ein oder zwei heb- und senkbare Ladeboxen oder Ladeflächen anbringen, wobei die Ladeboxen oder Ladeflächen sich an der Hubeinrichtung in Verbindung mit einem portalartigen Aufbau abstützen können. In diesem Falle ragt nur die Dachkonstruktion in ihrer ursprünglichen Art und Weise nach hinten über die Hinterachse hinaus. Dabei ist es lediglich dann noch erforderlich, in der Dachkonstruktion eine Aufnahmeeinrichtung für die hintere Öffnungsfläche, z.B. ein Rolltor, vorzusehen und Halteeinrichtungen und Führungsschienen für die Schiebetür oder Schiebetüren anzubringen.

Alternativ dazu ist es jedoch auch möglich, den Fahrzeugaufbau mit dem Leiterrahmen unverändert zu belassen, womit auch die Möglichkeit eines Hängerbetriebes gegeben ist. In diesem Falle kann man an einer oder auch an beiden Seiten des Leiterrahmens entsprechend schmälere höhenverstellbare Ladeboxen oder Ladeflächen vorsehen. Diese Ladeboxen oder Ladeflächen können dann in gleicher Weise über eine an der C-Säule angeordnete Hubeinrichtung mit einem Portalaufbau in ihrer Höhe verändert werden. In diesem Falle ist die innenliegende Laderampe jedoch zweigeteilt und nur jeweils von der Seite her zugänglich.

Eine sehr vorteilhafte Weiterbildung der Erfindung kann darin bestehen, dass ein Hilfsrahmen für einen Fahrgestellaufbau mit Ladeboxen oder Ladeflächen, mit Hubeinrichtungen für die Ladeboxen oder Ladeflächen, mit der innenliegenden Laderampe nebst Dachkonstruktion und Öffnungsflächen vorgesehen ist, der auf den Längsträgern des Leiterrahmens befestigbar ist.

Durch den Hilfsrahmen lässt sich praktisch eine Vorfertigung des erfindungsgemäßen Fahrzeugaufbaus schaffen, wobei durch entsprechende Befestigungsglieder nach einer derartigen Vorfertigung der Hilfsrahmen fest mit dem normalen Leiterrahmen des Fahrzeuges im wesentlichen in einem Montagegang verbunden werden kann.

Neben einer derartigen Montageerleichterung und den Vorteilen bezüglich einer Vorfertigung hat diese Ausgestaltung auch den Vorteil, dass bei Reparaturen oder im Falle eines Unfalles Fahrzeug und Fahrzeugaufbau auf einfache Weise ausgetauscht werden können.

Vorteilhafte Weiterbildungen und Ausgestaltungen der Erfindung ergeben sich aus den übrigen Unteransprüchen und aus den nachfolgend anhand der Zeichnung prinzipmäßig beschriebenen Ausführungsbeispielen.

Es zeigt:
- Fig. 1: eine Seitenansicht des erfindungsgemäßen Fahrzeuges mit innenliegender Laderampe;
- Fig. 2: eine Draufsicht auf das Fahrzeug nach der Fig. 1;
- Fig. 3: eine Heckansicht des Fahrzeugs nach der Fig. 1;
- Fig. 4: eine perspektivisch Ansicht des Fahrzeugaufbaus in Prinzipdarstellung;
- Fig. 5: eine Abwandlung eines Fahrzeuges nach der Fig. 1 für einen Anhängerbetrieb; und
- Fig. 6: in einer Ausschnittsvergrößerung einen Hilfsrahmen mit einer Befestigungseinrichtung eines vorgefertigten Fahrzeugaufbaus auf einem Leiterrahmen.

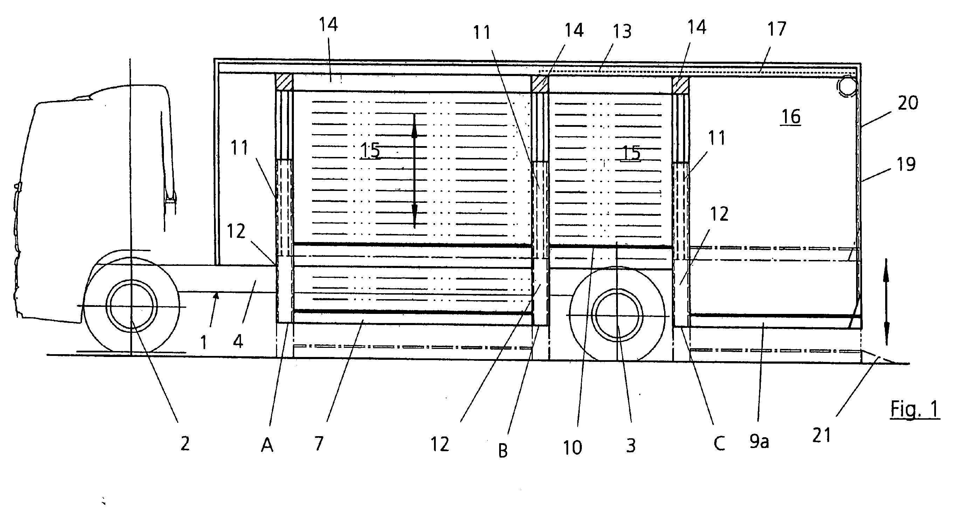

Ein in den Figuren 1 bis 3 dargestelltes Fahrzeug mit einem Fahrzeugrahmen 1 weist in üblicher Weise eine Vorderachse 2 und eine Hinterachse 3 auf. Selbstverständlich können auch jeweils mehr als eine Vorderachse 2 oder Hinterachse 3 vorgesehen sein. An dem Fahrzeugrahmen 1, der mit einem Leiterrahmen mit zwei in Längsrichtung auf Abstand voneinander verlaufenden Längsträgern 4 und 5 und mit dazwischenliegenden Quertraversen 6 versehen ist, sind insgesamt zwei in vertikaler Richtung verstellbare Ladeboxen bzw. Ladeflächen 7 und 8 vorgesehen, welche sich auf beiden Seiten der Längsträger 4 und 5 des Leiterrahmens neben diesem befinden. Eine dritte in vertikaler Richtung verstellbare Ladebox bzw. Ladefläche 9 befindet sich hinter der Hinterachse 3. Die dritte Ladebox 9 kann sich über die ganze Fahrzeugbreite erstrecken.

Über der Hinterachse 3 befindet sich noch eine weitere Ladebox 10, welche allerdings nicht höhenverstellbar ist.

Die höhenverstellbaren Ladeboxen 7, 8 und 9 können über nicht näher dargestellte Hubeinrichtungen 11 mit Hubzylindern 12, mit denen sie verbunden sind, von einer Fahrstellung bis in eine Entladestellung abgesenkt werden, wobei sich bei voll abgesenkter Stellung die Ladeflächen der Ladeboxen 7, 8, 9 auf Fahrbahnebene befinden.

Ebenso ist es möglich, im Bedarfsfalle auch die Ladeboxen 7, 8 oder 9 auf eine Rampenhöhe z.B. von 1100 mm zum Be- und Entladen anzuheben. Hierfür ist zwischen den Oberkanten der Ladeboxen 7, 8 und 9 ein entsprechender Freiraum zu einer Dachkonstruktion 13 freigehalten.

Jeweils zwei an beiden Fahrzeugseiten angeordnete Hubzylinder 12 für die Ladeboxen 7 und 8 sind über ihre Hubeinrichtung 11 und jeweils ein seitliches Portal 14 miteinander verbunden, wodurch sich eine entsprechende Stabilität und eine Erhöhung der Fahrzeugsteifigkeit ergibt. Die hintere Ladebox 9 ist durch eine mit einem Querportal 14 versehene Hubeinrichtung 11 höhenverstellbar. Durch die separaten Hubeinrichtungen 11 sind die Ladeboxen 7, 8 und 9 jeweils unabhängig voneinander höhenverstellbar.

An einer oder vorzugsweise auf beiden Fahrzeugseiten sind die Ladeboxen 7, 8 und 10 durch Rolltore 15 verschlossen, welche im geöffneten Zustand in nicht näher dargestellter Weise in bzw. unter die Dachkonstruktion 13 eingeschoben werden können.

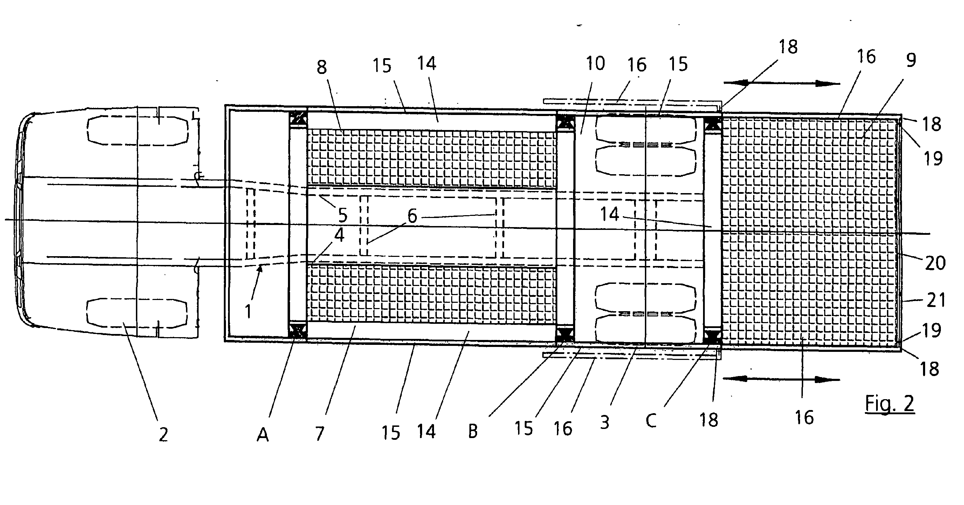

Während der Fahrzeugrahmen 1 mit den beiden Längsträgern 4 und 5 des Leiterrahmens sich normalerweise bis zum hinteren Ende des Fahrzeuges erstreckt, ist der Fahrzeugrahmen 1 bzw. sind die beiden Längsträger 4 und 5 kurz hinter der Hinterachse 3 abgeschnitten, wie dies aus den Figuren 1 und 2 ersichtlich ist. Das Fahrzeug besitzt in üblicher Weise drei Säulen zur Stabilisierung, nämlich eine sogenannte A-Säule, B-Säule und C-Säule. Die C-Säule befindet sich dabei kurz hinter der Hinterachse 3. An dieser Stelle werden die beiden Längsträger 4 und 5 abgeschnitten. An die C-Säule wird ebenfalls eine Hubeinrichtung 11 mit einem jeweils an jeder Seite angeordneten Hubzylinder 12 befestigt. Ein Portalaufbau 14 verbindet die beiden Hubzylinder 12 miteinander. An der Hubeinrichtung 11 ist in nicht näher dargestellter Weise die Ladebox 9 höhenverstellbar befestigt. Die Ladebox 9 besteht im wesentlichen aus einer unteren Ladefläche 9a.

An beiden Seiten des Fahrzeuges sind im Bereich der Ladebox 9 Schiebetüren 16 als Öffnungsflächen angeordnet. Die Schiebetüren 16 sind auf ihrer Oberseite über eine nicht näher dargestellte Führungsschiene 17 in Fahrzeuglängsrichtung verschiebbar mit der Dachkonstruktion 13 verbunden. Die Verschiebeeinrichtungen für die Schiebetüren 16 können in bekannter Weise Schiebegelenke mit einem Kniehebel aufweisen, wie dies bei Transporterfahrzeugtüren allgemein üblich ist. Dabei schwenken die beiden Schiebetüren 16 leicht seitlich aus, so dass sie sich im geöffneten Zustand zwischen der B-Säule und der C-Säule über der Hinterachse 3 befinden, wie dies aus der Fig. 2 ersichtlich ist.

Die beiden Schiebetüren 16 weisen an ihren hinteren Enden nach innen gerichtete Abwinklungen 18 auf. An den Abwinklungen 18 befinden sich nicht näher dargestellte vertikale Führungsschienen 19. In den beiden Führungsschienen 19 sind die Lamellen eines Rolltores 20 in geschlossenem Zustand der beiden Schiebetüren 16 geführt.

Wie ersichtlich, ist die hintere Ladebox 9 mit ihrer Ladefläche 9a als innenliegende Laderampe ausgebildet. Im Fahrzustand des Fahrzeuges befindet sich die Ladebox 9 mit der Ladefläche 9a als Laderampe in gleicher Höhe wie die übrigen Ladeboxen 7 und 8 mit einer entsprechenden Bodenfreiheit. Die Ladebox 9 stellt in diesem Falle einen normalen nach außen abgeschlossenen Laderaum im Inneren des Fahrzeugs dar.

Zum Be- und Entladen, z.B. von Getränkekisten, kann die Ladebox 9 bis auf das Fahrbahnniveau abgesenkt werden. Während zum Be- und Entladen der Ladeboxen 7 und 8 lediglich die beiden Rolltore 15 geöffnet werden müssen, womit eine Zugänglichkeit der Ladeboxen 7 und 8 von den Seiten her gegeben ist, lässt sich bei der hinteren Ladebox 9 eine Zugänglichkeit von allen Seiten erreichen. Hierzu wird in einem ersten Schritt das Rolltor 20 nach oben geschoben und in nicht näher dargestellter Weise in eine Führung oder eine Box in der Dachkonstruktion 13 eingeschoben. Anschließend lassen sich die beiden Schiebetüren 16 in Pfeilrichtung gemäß Fig. 2 nach vorne zwischen die B-Säule und die C-Säule außenseitig schieben. Wie aus der Fig. 2 ersichtlich ist, sind damit allseitig für eine Zugänglichkeit die Öffnungsflächen freigegeben und zwar ohne dass irgendwelche Stützen, Träger oder sonstige Einbauten in störender Weise vorhanden sind. Die Ladebox 9 mit der Ladefläche 9a fungiert in dieser Stellung wie eine normale Laderampe mit Zugänglichkeit von allen Seiten, denn die Ladefläche 9a befindet sich auf Fahrbahnniveau.

Zusätzlich kann auf der Rückseite noch eine schwenkbare Bordwand 21, vorgesehen sein, welche in abgesenktem Zustand von der vertikalen Position, in der sie sich im Fahrzustand befindet, in eine horizontale Lage abgesenkt wird, wie dies aus der Fig. 1 ersichtlich ist (gestrichelte Darstellung). In diesem Falle ergibt sich zur Erleichterung noch eine schräge Auffahrrampe zur der Ladefläche 9a.

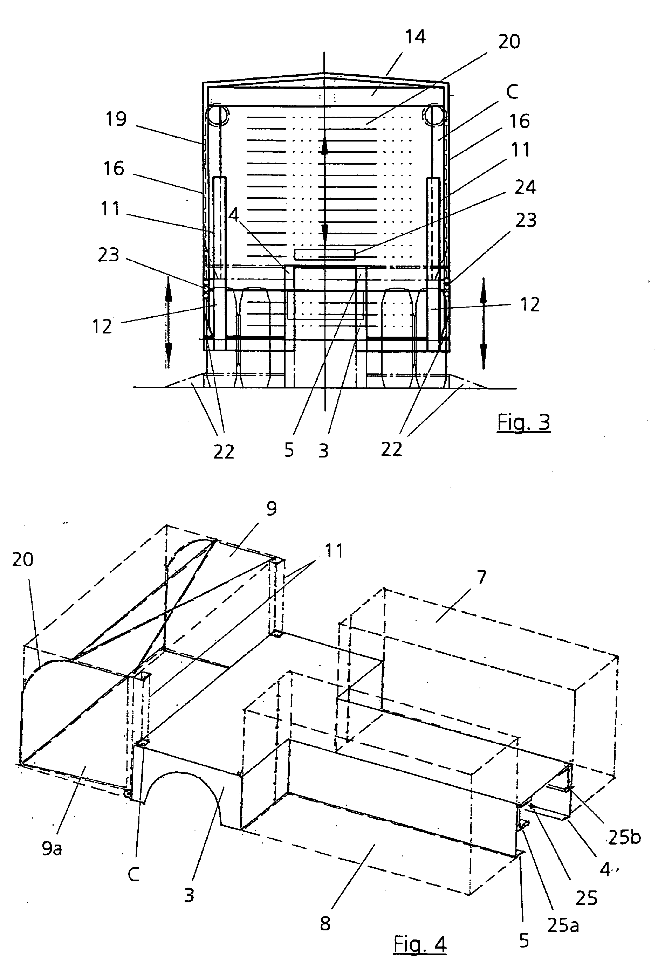

In gleicher Weise können selbstverständlich auch an beiden Seiten der Ladeboxen 9 Bordwände 22 vorgesehen werden, welche ebenfalls in abgesetztem Zustand der Ladefläche 9a als Auffahrrampen dienen (siehe gestrichelte Darstellung in Fig. 3).

Wie ersichtlich, wird bei dem erfindungsgemäßen Fahrzeug zum Be- und Entladen eine deutlich geringere Verkehrsfläche benötigt als bei herkömmlichen Fahrzeugen mit außen liegender Laderampe, welche sich im allgemeinen um bis zu 2 m und mehr nach hinten von dem Fahrzeug weg erstrecken kann. Im vorliegenden Falle ist es nicht mehr notwendig, einen derartigen Freiraum vorzuhalten.

Wie weiterhin ersichtlich, ist es gegebenenfalls auch möglich, bei beschränkten Verkehrsraumverhältnissen die Laderampe von einer oder von beiden Seiten bei geöffneter Schiebetüre bzw. geöffneten Schiebetüren 16 zu beladen und zu entladen.

Nach erfolgter Be- oder Entladung kann in einfacher Weise über die Hubeinrichtung 11 mit den Hubzylindern 12 die Ladebox 9 wieder in Fahrstellung hochgefahren werden. Im Unterschied zu den bekannten außenliegenden Laderampen ist es in diesem Fall nicht mehr erforderlich, das sich auf der Ladefläche 9a befindliche Ladegut umzusetzen und in das Fahrzeuginnere zu verfrachten, sondern es kann auf der Ladefläche 9a verbleiben, da ja die Ladebox 9 innenliegend ist und sich nach Schließen der Öffnungsflächen mit den Schiebetüren 16 und dem Rolltor 20 im Inneren des Fahrzeugs befindet.

In den Abwinklungen 18 der beiden Schiebetüren 16 können die üblichen Heckleuchten 23, wie z.B. Blinker, Rücklichter, Nebelschlussleuchte, Rückfahrscheinwerfer und dergleichen angebracht sein, wie in der Fig. 3 lediglich prinzipmäßig angedeutet. An dem Rolltor 20 kann an einer Lamelle auch ein Nummernschild 24 angeordnet sein.

Die Ladebox 9 mit der Ladefläche 9a kann im Bedarfsfalle auch an bereits im Einsatz befindlichen Fahrzeugen nachgerüstet werden. Hierzu ist es lediglich erforderlich, die beiden Längsträger 4 und 5 an der C-Säule abzutrennen und an der C-Säule die Hubeinrichtung 11 mit den Hubzylindern 12 zusammen mit der Ladebox 9 und der Ladefläche 9a anzubringen. In diesem Fall besitzt dann das Fahrzeug nur hinter der Hinterachse 3 eine höhenverstellbare Ladebox 9, womit allerdings alle vorstehend beschriebenen Vorteile erfüllt werden.

Darüber hinaus ist es auch möglich, neben einem Montageaufbau auf ein Fahrzeug mit einem Leiterrahmen den Fahrzeugaufbau auch komplett zusammen mit den Ladeboxen 7, 8, 9 und gegebenenfalls 10 und den dazugehörigen Einrichtungen, wie Hubeinrichtungen 11 mit den Hubzylindern 12, als Einheit vorzufertigen und dann mit dem Leiterrahmen mit den Längsträgern 4 und 5 und gegebenenfalls den Quertraversen 6 eines Fahrzeuges zu verbinden. Hierzu dient ein Hilfsrahmen 25 mit Längsträgern 25a und 25b, wie dieser in der Fig. 4, welche einen derartigen vorgefertigten Fahrzeugaufbau in Prinzipdarstellung zeigt, dargestellt ist.

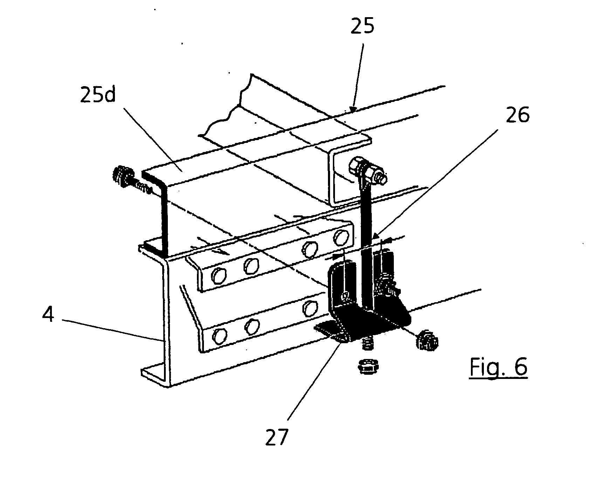

Zur Montage des vorgefertigten Fahrzeugaufbaus gemäß Fig. 4 wird dieser mit dem Hilfsrahmen 25 auf den Leiterrahmen aufgesetzt, wobei die beiden Längsträger 25a und 25b auf die Längsträger 4 und 5 des Leiterrahmens aufgelegt werden. Die beiden Hilfsrahmenlängsträger 25a und 25b können dann auf beliebige Weise mit den beiden Längsträgern 4 und 5 verbunden werden. In der Fig. 6 ist hierzu eine Möglichkeit angegeben. Wie daraus ersichtlich, erfolgt dabei die Verbindung über mehrere auf Abstand voneinander angeordnete Schraubverbindungen 26 mit Klemmgliedern, z.B. Befestigungsplatten 27, wobei die Schrauben der Schraubverbindungen 26 über entsprechende Bohrungen und Befestigungsschienen jeweils mit den Hilfsrahmenlängsträgern 25a, 25b und den Längsträgern 4 und 5 verbunden werden.

Ebenso wie die Ladeboxen 7 und 8 kann auch die Ladebox 9 im Bedarfsfalle bis auf eine Rampenhöhe zum Be- und Entladen hochgefahren werden, wobei in diesem Falle nach Entfernung des Rolltores 20 in herkömmlicher Weise nach hinten auf eine Rampe oder ähnliches be- und entladen werden kann.

Anstelle eines Fahrzeugrahmens 1 mit einem Leiterrahmen mit Längsträgern 4 und 5 und Quertraversen 6 kann gegebenenfalls auch ein einziger Mittelträger vorgesehen werden, wie dies aus dem DE-GM 298 13 993 ersichtlich ist.

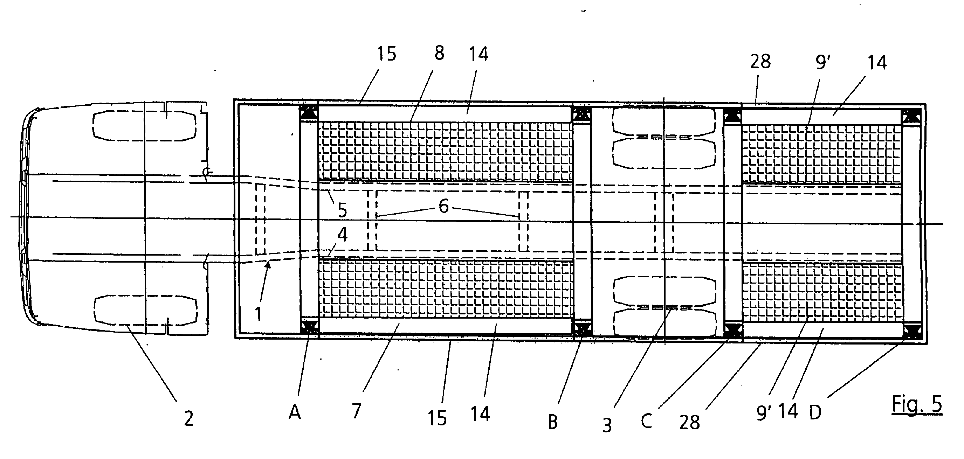

Falls vorgesehen ist, das Fahrzeug auch im Anhängerbetrieb zu betreiben, können die beiden Längsträger 4 und 5 nicht mehr hinter der Hinterachse 3 abgeschnitten werden, sondern müssen sich in üblicher Weise bis zu dem Fahrzeugheck erstrecken. Es ist jedoch auch möglich, in diesem Fall das Fahrzeug mit innenliegenden Laderampen zu versehen, wie dies aus der Fig. 5 ersichtlich ist. Dabei befindet sich hinter der Hinterachse 3 noch ein Fahrzeugheck mit einer D-Säule, zu beiden Seiten des Leiterrahmens mit den Längsträgern 4 und 5 befinden sich jedoch bis auf das Fahrbahnniveau absenkbare Ladeboxen 9', welche ebenfalls an einer Hubeinrichtung 11 mit Hubzylindern 12 befestigt sind. Die beiden Ladeboxen 9' können dabei unabhängig oder gemeinsam höhenverstellbar sein, wie dies auch grundsätzlich bei den beiden Ladeboxen 7 und 8 der Fall ist. Wie ersichtlich, werden auf diese Weise zwei innenliegende Laderampen geschaffen, welche von der Seite her über Öffnungsflächen zugänglich sind. Anstelle von Schiebetüren 16 genügen in diesem Falle gegebenenfalls jeweils seitliche Rolltore 28.

## Patentansprüche

1. Fahrzeug mit wenigstens einer Vorderachse und wenigstens einer Hinterachse, mit heb- und senkbaren Ladeboxen oder Ladeflächen zur Aufnahme von Ladegut, mit einem Fahrzeugrahmen und mit einer Laderampe am Heck des Fahrzeugrahmens, wobei wenigstens ein Teil der Ladeboxen oder Ladeflächen durch an dem Fahrzeugrahmen angeordnete Hubeinrichtungen in vertikaler Richtung heb- und senkbar ist, wobei wenigstens eine heb- und senkbare Ladebox oder Ladefläche (9) hinter der wenigstens einen Hinterachse (3) derart angeordnet ist, dass sie als innenliegende Laderampe ausgebildet ist, **dadurch gekennzeichnet, dass** seitlich und rückseitig am Fahrzeugrahmen (1) angeordnete Öffnungsflächen im Bereich der Laderampe vorgesehen sind, die zum Laden oder Entladen Ladeöffnungen freigeben, und wobei an der Fahrzeugrückseite ein Rolltor (20) und an beiden Seiten im Bereich der heb- und senkbaren Ladebox oder Ladefläche (9) Schiebetüren (16) als Öffnungsflächen vorgesehen sind, und wobei die Schiebetüren (16) an ihren hinteren Enden mit senkrechten Führungsschienen (19) für eine Führung des Rolltores (20) versehen sind.

2. Fahrzeug nach Anspruch 1,
**dadurch gekennzeichnet, dass**
die Ladeöffnungen in einer vorgewählten Stellung der Hubeinrichtung (11) freigegeben sind.

3. Fahrzeug nach Anspruch 1 oder 2,
**dadurch gekennzeichnet, dass**
die Schiebetüren (16) an ihren hinteren Enden jeweils mit einer nach innen gerichteten Abwinklung (18) versehen sind, an der Beleuchtungseinrichtungen (23) für die Fahrzeugrückseite angeordnet sind.

4. Fahrzeug nach einem der Ansprüche 1 bis 3,
**dadurch gekennzeichnet, dass**
die Schiebetüren (16) an der Dachkonstruktion (13) hinter der Hinterachse (3) befestigt und in horizontalen Führungsschienen (19) geführt sind.

5. Fahrzeug nach einem der Ansprüche 1 bis 4,
**dadurch gekennzeichnet, dass**
das Rolltor (20) im hochgeschobenen Zustand in der Dachkonstruktion (13) hinter der Hinterachse (3) aufgenommen ist.

6. Fahrzeug nach einem der Ansprüche 1 bis 5,
**dadurch gekennzeichnet, dass**
die Hubeinrichtung (11) für die wenigstens eine hinter der Hinterachse (3) angeordnete Ladebox oder Ladefläche (9) an der C-Säule des Fahrzeugrahmens angeordnet ist.

7. Fahrzeug nach Anspruch 6,
**dadurch gekennzeichnet, dass**
die Hubeinrichtung (11) mit Hubzylindern (12) versehen ist, die an vertikalen Schienen der C-Säule angeordnet sind.

8. Fahrzeug nach Anspruch 7,
**dadurch gekennzeichnet, dass**
die Hubeinrichtung (11) mit den Schienen einen Portalaufbau (14) bildet.

9. Fahrzeug nach einem der Ansprüche 1 bis 8,
**dadurch gekennzeichnet, dass**
unter den Schiebetüren (16) oder vor diesen jeweils ein Bordwandteil (22) angeordnet ist, das im abgesenkten Zustand der Ladebox oder Ladefläche (9) als Auffahrrampe vorgesehen ist.

10. Fahrzeug nach einem der Ansprüche 1 bis 9,
**dadurch gekennzeichnet, dass**
an der Rückseite des Fahrzeugs ein Bordwandteil (21) angeordnet ist, das im abgesenkten Zustand der Ladebox oder Ladefläche (9) als Auffahrrampe vorgesehen ist.

11. Fahrzeug nach einem der Ansprüche 1 bis 10 mit einem Leiterrahmen als Teil des Fahrzeugrahmens, der zwei auf Abstand voneinander angeordnete Längsträger (4,5) und die Längsträger (4,5) miteinander verbindende Quertraversen (6) aufweist,
**dadurch gekennzeichnet, dass**
zum nachträglichen Einbau der innenliegenden Laderampe der Leiterrahmen im Bereich der wenigstens einen Hinterachse (3) abgeschnitten ist und dass eine Hubeinrichtung (11) für die wenigstens eine Ladebox oder Ladefläche (9) hinter der Hinterachse (3) an der C-Säule des Fahrzeugrahmens (1) anbringbar ist.

12. Fahrzeug nach einem der Ansprüche 1 bis 10 mit einem Leiterrahmen als Teil des Fahrzeugrahmens, der zwei auf Abstand voneinander angeordnete Längsträger (4,5) und die Längsträger (4,5) miteinander verbindende Quertraversen (6) aufweist,
**dadurch gekennzeichnet, dass**
seitlich an dem Leiterrahmen hinter der wenigstens einen Hinterachse (3) die wenigstens eine Ladebox oder Ladefläche (9) angeordnet ist.

13. Fahrzeug nach Anspruch 12,
**dadurch gekennzeichnet, dass**
auf beiden Seiten des Leiterrahmens eine Ladebox oder Ladefläche (9) angeordnet ist.

14. Fahrzeug nach einem der Ansprüche 11 bis 13 mit einem Leiterrahmen als Teil des Fahrzeugrahmens, der zwei auf Abstand voneinander angeordnete Längsträger (4,5) und die Längsträger (4,5) miteinander verbindende Quertraversen (6) aufweist,
**dadurch gekennzeichnet, dass**
ein Hilfsrahmen (25) für einen Fahrgestellaufbau mit Ladeboxen oder Ladeflächen (7,8,9,10), mit Hubeinrichtungen (11) für die Ladeboxen oder Ladeflächen, mit innenliegender Laderampe nebst Dachkonstruktion (13) und Öffnungsflächen vorgesehen ist, der auf den Längsträgern (4,5) des Leiterrahmens befestigbar ist.

15. Fahrzeug nach Anspruch 14,
**dadurch gekennzeichnet, dass**
der Hilfsrahmen (25) über Verbindungsglieder (26, 27) lösbar mit den Längsträgern (4,5) des Leiterrahmens verbunden ist.

16. Fahrzeug nach Anspruch 15,
**dadurch gekennzeichnet , dass**
die Verbindungsglieder Befestigungsplatten (27) und Schraubverbindungen (26) aufweisen.

## Claims

1. Vehicle having at least one front axle and at least one rear axle, halving loading boxes or loading surfaces, that can be raised and lowered, for receiving cargo, having a vehicle frame and having a loading ramp at the rear of said vehicle frame, wherein at least some of the loading boxes or loading surfaces can be raised and lowered in the vertical direction by lifting apparatuses arranged on the vehicle frame, and wherein at least one loading box or loading surface (9), that can be raised and lowered, is arranged behind the at least once rear axle (3) in such a way that it is constructed as an internally located loading ramp, **characterised in that** opening surfaces arranges on the vehicle frame (1) at the sides and rear side are provided in the region of said loading ramp and unblock loading apertures for loading or unloading purposes, and wherein, as opening surfaces, a roller shutter (20) is provided on the rear side of the vehicle and sliding doors (16) are provided on both sides, in the region of the loading box or loading surface (9) that can be raised or lowered, and wherein the sliding doors (16) are provided, at their rear ends, with perpendicular guide rails (19) for gliding the roller shutter (20).

2. Vehicle according to claim 1,
**characterised in that** the loading apertures are unblocked when the lifting apparatus (11) is in a pre-selected position.

3. Vehicle according to claim 1 or 2,
**characterised in that** the sliding doors (16) are each provided, at their rear ends, with an inwardly directed angled portion (18) on which illuminating apparatuses (23) for the rear side of the vehicle are arranged.

4. Vehicle according to one of claim 1 to 3,
**characterised in that** the sliding doors (16) are fastened to the roof structure (13) behind the rear axle (3) and are guided in horizontal guide rails (19).

5. Vehicle according to one of claims 1 to 4,
**characterised in that** the roller shutter (20) is received in the roof structure (13) behind the rear axle (3) when in the pushed-up condition.

6. Vehicle according to one of claims 1 to 5,
**characterised in that** the lifting apparatus (11) for the at least one loading box or loading surface (9) arranged behind the rear axle (3) is arranged on the C-pillar of the vehicle frame.

7. Vehicle according to claim 6,
**characterised in that** the lifting apparatus (11) is provided with lifting cylinders (12) which are arranged on vertical rails belonging to the C-pillar.

8. Vehicle according to claim 7,
**characterised in that** the lifting apparatus (11) forms, with the rails, a gantry superstructure (14).

9. Vehicle according to one of claim 1 to 8,
**characterised in that** a part (22) of the vehicle side, which is provided as a drive-up ramp when the loading box or loading surface (9) is in the lowered condition, is arranged below, or in front of, the sliding doors (16) in each case.

10. Vehicle according to one of claims 1 to 9,
**characterised in that** a part (21) of the vehicle side, which is provided as a drive-up ramp when the loading box or loading surface (9) is in the lowered condition, is arranged can the rear side of the vehicle.

11. Vehicle according to one of claims 1 to 10, having, as part of the vehicle frame, a ladder-type frame which has two longitudinal beams (4, 5) arranged at a distance from one another and cross-members (6) which connect said longitudinal beams (4, 5) to one another,
**characterised in that**, for the retrofitting of the internally located loading ramp, the ladder-type frame is cut away in the region of the at least one rear axle (3), and that a lifting apparatus (11) for the at least one loading box or loading surface (9) can be attached to the C-pillar of the vehicle frame (1) behind the rear axle (3).

12. Vehicle according to one of claims 1 to 10, having, as part of the vehicle frame, a ladder-type frame which has two longitudinal beams (4, 5) arranged at a distance from one another and cross-members (6) which connect said longitudinal beams (4, 5) to one another,
**characterised in that** the at least one loading box or loading surface (9) is arranged laterally on the ladder-type frame behind the at least one rear axle (3).

13. Vehicle according to Claim 12,
**characterised in that** a loading box or loading surface (9) is arranged on both sides of the ladder-type frame.

14. Vehicle according to one of claims 11 to 13, having, as part of the vehicle frame, a ladder-type frame which has two longitudinal beams (4, 5) arranged at a distance from once another and cross-members (6) which connect said longitudinal beams (4, 5) to one another,
**characterised in that** an auxiliary frame (25) for a chassis superstructure having loading boxes or loading surfaces (7, 8, 9, 10), having lifting apparatuses (11) for said loading boxes or loading surfaces, and having an internally located loading ramp together with a roof structure (13) and opening surfaces, is provided, which can be fastened to the longitudinal beams (4, 5) of the ladder-type frame.

15. Vehicle according to claim 14,
**characterised in that** the auxiliary frame (25) is detachably connected to the longitudinal beams (4, 5) of the ladder-type frame via connecting members (26,27).

16. Vehicle according to claim 15,
**characterised in that** the connecting members have fastening plates (27) and screw connections (26).

## Revendications

1. Véhicule comportant au moins un essieu avant et un essieu arrière, deux conteneurs ou plate-formes de changement relevables et abaissables pour recevoir une cargaison, un châssis de véhicule et une rampe de changement à l'arrière du châssis de véhicule, dans lequel au moins une partie des conteneurs ou plate-formes de chargement peut être relevée et abaissée dans la dilection verticale par des dispositifs élévateurs solidaires du châssis du véhicule, au moins un conteneur ou plate-forme de changement (9) relevable et abaissable étant disposé en carrière de l'au moins un essieu arrière (3) de telle sorte qu'il constitue une rampe de changement intérieure, **caractérisé en ce que** des surfaces d'ouverture disposées latéralement et à l'arrière sur le châssis de véhicule (1) sont prévues dans la région de la rampe de chargement, surfaces qui, pour le chargement ou le déchargement, dégagent des ouvertures de chargement et dans lesquelles sont prévus, en tant que surfaces d'ouverture, sur le côté arrière du véhicule, un volet roulant (20) et, sur les deux côtés dans la région du conteneur ou plate-forme de changement (9) relevable et abaissable, des portes coulissantes (16), les portes coulissantes (16) étant pourvues, à leurs extrémités arrière, de rails de guidage verticaux (19) servant pour le guindage du volet roulant (20).

2. Véhicule selon la revendication 1,
**caractérisé en ce que**
les ouvertures de chargement sont dégagées dans une position du dispositif élévateur (11) choisie à l'avance.

3. Véhiculé selon la revendication 1 ou 2,
**caractérisé en ce que,**
à leurs extrémités arrière, les portes coulissantes (16) sont pourvues chacune d'un pli (18) dirigé vers l'intérieur, auquel sont attachés des dispositifs d'éclairage (23) pour le côté arrière du véhicule.

4. Véhicule selon l'une des revendications 1 à 3,
**caractérisé en ce que**
les portes coulissantes (16) sont fixées à la structure de toit (13) en arrière de l'essieu arrière (3) et guidées dans des rails de guindage horizontaux (19).

5. Véhicule selon l'une des revendications 1 à 4,
**caractérisé en ce que**
dans l'état relevé, le volet roulant (20) est logé dans la structure de toit (13) en arrière de l'essieu arrière (3).

6. Véhicule selon l'une des revendications 1 à 5,
**caractérisé en ce que**
le dispositif élévateur (11), pour l'au moins un conteneur ou plate-forme de changement (9) disposé en arrière de l'essieu arrière (3), est disposé au niveau du montant C du châssis du véhicule.

7. Véhicule selon la revendication 6,
**caractérisé en ce que**
le dispositif élévateur (11) est équipé de vérins élévateurs (12) qui sont ménagés dans les rails verticaux du montant C.

8. Véhicule selon la revendication 7,
**caractérisé en ce que**
le dispositif élévateur (11) forme une structure de portique (14) avec les rails.

9. Véhicule selon l'une des revendications 1 à 8,
**caractérisé en ce que,**
au-dessous ou en avant de chacune des portes coulissantes (16), est disposée une partie de paroi latérale (22) qui est prévue comme rampe d'accès dans l'état abaissé du conteneur ou plate-forme de changement (9).

10. Véhicule selon l'une des revendications 1 à 9,
**caractérisé en ce que,**
sur le côté arrière du véhicule, est agencée une partie de paroi latérale (21) qui est prévue comme rampe d'accès dans l'état abaissé du conteneur ou plate-forme de chargement (9).

11. Véhicule selon l'une des revendications 1 à 10, comprenant un châssis en échelle en tant que partie du châssis du véhicule, qui comporte des poutres longitudinales (4, 5) disposées à distance l'une de l'autre, et des traverses (6) qui relient les poutres longitudinale (4, 5) l'une à l'autre,
**caractérisé en ce que,**
pour un montagne ultérieur de la rampe de changement intérieure, le châssis en échelle est coupé, dans la région de l'au moins un essieu arrière (3), et **en ce qu'**un dispositif élévateur (11) pour l'au moins un conteneur ou plate-forme de changement (9) peut être agencé sur le montrant C du châssis de véhicule (1), en arrière de l'essieu arrière (3).

12. Véhicule selon l'une des revendications 1 à 10, comprenant un châssis en échelle en tant que partie du châssis du véhicule, qui comporte deux poutres longitudinales (4, 5) disposées à distance l'une de l'autre et des traverses (6) qui relient les poutres longitudinales (4, 5) l'une à l'autre,
**caractérisé en ce que**
l'au moins un conteneur ou plate-forme de changement (9) est disposé latéralement au châsses en échelle, en arrière de l'au moins un essieu arrière (3).

13. Véhicule selon la revendication 12,
**caractérisé en ce que**
un conteneur ou plate-forme de changement (9) est disposé sur les deux côtés du châssis en échelle.

14. Véhicule selon l'une des revendications 11 à 13, comprenant un châssis en échelle constituant une partie du châssis du véhicule, qui comporte deux poutres longitudinales (4, 5) disposées à distance l'une de l'autre, et des traverses (6) qui relient les poutres longitudinales (4, 5) l'une à l'autre,
**caractérisé en ce que**
il est prévu un châssis auxiliaire (25) pour une construction de châssis comprenant des conteneurs ou plate-formes de changement (7, 8, 9, 10), des dispositifs élévateurs (11) pour les conteneurs ou plate-formes de chargement, une rampe de chargement située à l'intérieur à côté de la structure de toit (13) et des surfaces d'ouverture, et qui peut être fixé sur les poutres longitudinales (4, 5) du châssis en échelle,

15. Véhicule selon la revendication 14,
**caractérisé en ce que**
le châssis auxiliaire (25) est relié aux poutres longitudinales (4, 5) du châssis en échelle de façon démontable par l'intermédiaire d'organes d'assemblage (26, 27).

16. Véhicule selon la revendication 15,
**caractérisé en ce que**
les organes d'assemblage comportent des plaques de fixation (27) et des liaisons boulonnées (26).
